Europäisches Patentamt

European Patent Office

Office européen des brevets

(11) Numéro de publication: **0 192 527**
**A1**

## (12) DEMANDE DE-BREVET EUROPEEN

(21) Numéro de dépôt: **86400173.0**

(22) Date de dépôt: **29.01.86**

(51) Int. Cl.⁴: **B 60 R 25/00**

(30) Priorité: **30.01.85 FR 8501271**

(43) Date de publication de la demande:
**27.08.86 Bulletin 86/35**

(84) Etats contractants désignés:
**BE DE GB IT NL SE**

(71) Demandeur: **Clavier, Daniel**
**La Basse Canterie**
**F-44120 Vertou(FR)**

(72) Inventeur: **Clavier, Daniel**
**La Basse Canterie**
**F-44120 Vertou(FR)**

(74) Mandataire: **Viard, Jean**
**Cabinet VIARD 28 bis, avenue Mozart**
**F-75016 Paris(FR)**

(54) **Dispositif antivol notamment pour véhicule automobile.**

(57) Dispositif antivol notamment pour véhicule automobile tel que voiture particulière ou camion à mise en garde automatique lorsque le dernier occupant quitte le véhicule.

Selon l'invention, un clavier électronique de commande (87) situé à l'intérieur du véhicule permet, après temporisation, de couper l'alarme par action sur le relais (1) et de programmer une mise en garde réduite donnant librement accès à l'habitacle ou à la caisse du camion tout en conservant les autres sécurités de démarrage (5) et de verrouillage du capot moteur (88).

EP 0 192 527 A1

./...

Fig. 1

La présente invention a pour objet un dispositif antivol pour véhicule automobile tel que voiture individuelle ou camion, avec ou sans remorque, permettant de protéger le véhicule contre le vol et/ou l'enlèvement par un processus de mise en garde automatique et de sélection du degré de protection désiré.

Dans la technique connue, la mise en état de garde et la neutralisation des différents systèmes d'alarme s'effectuent généralement au moyen d'un actionneur disposé à l'intérieur ou à l'extérieur de l'habitacle qui peut être un interrupteur, une clé de sécurité agissant sur un bloc de contact électrique, un clavier ou un dispositif de télécommande.

La mise en garde de tous ces dispositifs antivol nécessite généralement un geste volontaire de la part du conducteur. Or, ce geste peut être oublié. Il est habituellement négligé pour des arrêts de courte durée ou, dans certains endroits considérés comme sûrs.

Un premier objet de la présente invention est un dispositif antivol assurant une mise en garde automatique lorsque le conducteur ou le dernier passager a quitté le véhicule, ce qui assure la sécurité de celui-ci même pour des absences de courte durée du conducteur.

Des dispositifs à mise en garde automatique ont déjà été proposés. Dans le brevet FR-A-2 418 123, la mise en garde est obtenue automatiquement par coupure du contact moteur. Mais la protection offerte par ce dispositif est limitée et de plus il ne faut pas rester dans le véhicule une fois que le contact a été coupé à moins de mettre le dispositif antivol hors circuit.

Dans FR-A-2 347 729, le fonctionnement automatique de l'antivol est encore obtenu par coupure du contact d'allumage, cette sécurité étant combinée avec une sécurité périmétrique et une temporisation de mise en état de veille. Cependant, après mise hors service du dispositif antivol, il faut à nouveau mettre le moteur en marche pour réarmer le circuit. Enfin, le dispositif doit être mis hors service chaque fois que le conducteur ou un passager désire entrer dans la voiture, même sans mettre celle-ci en marche.

Le brevet GB-A-2 090 033 décrit un dispositif antivol pour véhicule, comprenant un circuit logique séquentiel contrôlant l'état des ouvertures telles que des portes, et la présence ou l'absence d'une personne dans l'habitacle du véhicule, ce dispositif se mettant en garde automatiquement lorsque le conducteur quitte son siège. Dans ce dispositif toutefois, l'alarme doit être neutralisée à partir de l'extérieur du véhicule ce qui peut faciliter une introduction frauduleuse à l'intérieur de celui-ci. De plus, la sécurité ainsi assurée est une sécurité négative qui devient inopérante en cas de défaillance d'un contact ou de rupture d'un fil. Enfin, ce dispositif ne permet pas le choix d'un degré de sécurité et n'apporte aucune solution en ce qui concerne le vol par enlèvement du véhicule.

Le brevet GB-A-2 045 985 se rapporte à un dispositif antivol pour automobile comprenant d'une part un clavier et d'autre part des contacteurs de portes, le véhicule ne pouvant être mis en marche que lorsque tous les contacteurs sont convenablement fermés. Mais ces contacteurs agissent directement et sans temporisation sur un relais d'alarme d'où la nécessité d'utiliser une clé de porte permettant de neutraliser ces contacts. La nécessité de cette clé extérieure diminue le niveau de sécurité de l'installation d'alarme, dans la mesure où la serrure peut être crochetée.

La présente invention a pour but de pallier les inconvénients des dispositifs connus et de proposer un dispositif antivol à mise en garde automatique permettant l'adjonction de n'importe quel moyen de détection, afin de signaler par voie sonore et/ou lumineuse toute tentative d'effraction.

Un second objet de la présente invention est un dispositif antivol dont le degré de sécurité puisse être volontairement déterminé et qui permette l'accès à l'intérieur du véhicule même lorsque certains des circuits du dispositif sont à l'état de veille.

Un autre objet de la présente invention est la réalisation d'un dispositif antivol qui condamne automatiquement la mise en marche du véhicule et l'accès au compartiment moteur dès l'instant où on laisse le véhicule en stationnement, même en cas de décharge totale de la batterie.

Encore un autre objet de la présente invention est un dispositif antivol assurant simultanément la coupure de l'alimentation du moteur, le verrouillage du compartiment moteur et l'alimentation des circuits de détection et d'alarme.

Encore un autre objet de la présente invention est un dispositif antivol pouvant être monté moyennant quelques adaptations tant sur les véhicules de tourisme que sur les camions à caisse de chargement, ou du type tracteur plus semi-remorque.

Selon la présente invention, le dispositif antivol pour véhicule automobile du type comprenant un circuit électronique incluant un relais de garde relié d'une part à des moyens de détection comprenant des contacteurs d'ouverture et des contacteurs de présence humaine à l'intérieur du véhicule, et d'autre part, à des moyens d'alarme et/ou d'action sur un organe moteur du véhicule, est caractérisé en ce qu'il comprend un clavier électronique de commande, des moyens de temporisation connectés entre le relais de garde et le relais de déclenchement de l'alarme, un relais de démarrage interdisant la mise en marche du moteur, un ou des moyens interrupteurs manoeuvrables depuis l'intérieur de l'habitacle avant fermeture des contacts d'accès, la commande des relais de garde de moteur et l'inhibition des moyens de détection étant sous la dépendance du codage du clavier, chacune des touches activées du clavier correspondant à un organe de commutation, de manière à pouvoir programmer une garde totale ou une garde réduite.

Ainsi, à partir de la commande par clavier, il est possible, en fonction des données introduites, de protéger contre le vol, soit le véhicule lui-même, soit une partie de celui-ci telle que la caisse de chargement ou la semi-remorque d'un camion, chaque touche du clavier correspondant à la commande d'un relais commandant la mise en garde d'une partie ou d'un organe déterminé du véhicule.

C'est ainsi que dans certains cas, il est possible de laisser tourner le moteur d'un camion dans un souci de chauffage, de dégivrage ou de non congélation du fuel, alors que le véhicule est sous protection du système antivol. De même, l'installation de la garde réduite permet l'accès à l'habitacle et/ou au coffre à bagages sans qu'il soit possible d'accéder au compartiment moteur, ni de mettre en route celui-ci.

Selon une autre caractéristique de l'invention, le dispositif comprend des moyens interrupteurs internes à l'habitacle du véhicule, branchés en série avec les contacts d'accès dans le circuit d'alimentation du relais de garde, la mise en garde se traduisant par une coupure de l'alimentation du moteur, le verrouillage du capot moteur et par l'alimentation des circuits de détection et d'alarme.

Ainsi, la sécurité du véhicule est essentiellement une sécurité positive dans laquelle toute tentative de fraude sur le dispositif antivol déclenche l'alarme et la mise hors circuit de l'alimentation du moteur.

0192527

D'autres caractéristiques et avantages de la présente invention apparaîtront au cours de la description qui va suivre de modes particuliers de réalisation, donnés uniquement à titre d'exemples non limitatifs, en regard des dessins qui représentent:

- La Fig.1, un schéma électronique d'un dispositif antivol selon l'invention destiné à une voiture particulière;
- La Fig.2, un schéma d'un dispositif antivol pour camion;
- La Fig.3, un schéma simplifié de branchement multifilaire des contacteurs de détection;
- Les Figs.4 et 5, des vues respectivement en coupe verticale et par-dessus du balancier antichocs et anti-soulèvement;
- La Fig.6, une vue des moyens de blocage du capot moteur;
- La Fig.7, un schéma simplifié de montage d'un dispositif selon l'invention appliqué aux poids lourds;
- La Fig.8, une vue du pupitre de commande d'un dispositif selon l'invention en version poids lourd.

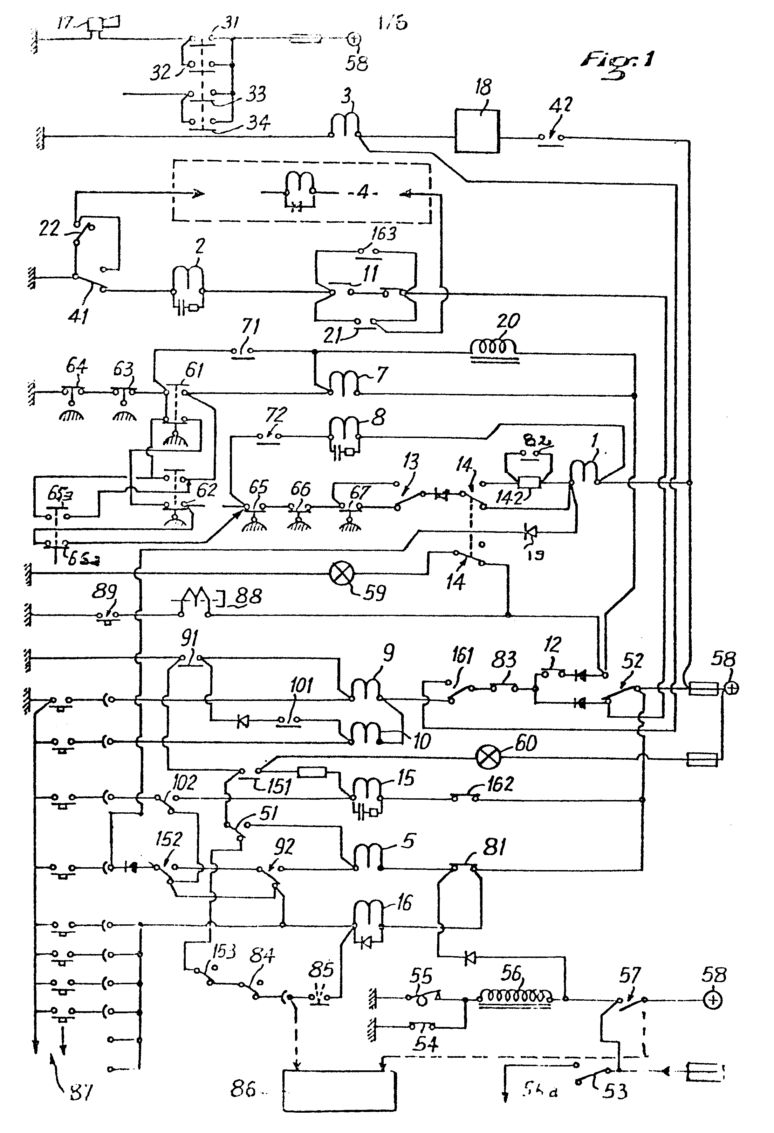

Sur la Fig.1, le circuit électronique se compose essentiellement d'un relais de garde 1 électriquement relié à une source de tension 58 qui peut être la batterie du véhicule ou une batterie de secours, à travers un fusible (non référencé, par exemple de 5 A.)., d'un relais d'alarme 2 destiné à déclencher les signaux d'alarme, d'un relais de sortie 3, d'un relais de temporisation 4 et d'un relais de démarrage 5 schématisés par des enroulements. Ces relais principaux sont actionnés directement ou indirectement par des relais 7, 8, 9, 10, 15 et 16 reliés aux différents détecteurs et au clavier de commande 87. On entendra par la suite, par relais, des commutateurs capables d'établir des liaisons électriques sous l'influence d'un signal de commande. Les moyens de détection consistent en un certain nombre de contacts qui sont respectivement les contacts de portières avant 61 et 62, les contacts de sièges 63, 64, les contacts de portières arrière et coffre 65, 66, 67, un balancier de détection d'inclinaison ou de choc 85, et éventuellement une centrale radar 86. Les contacts de sièges peuvent éventuellement être remplacés par un contacteur disposé sur le frein à main. Le dispositif est constitué de deux circuits indépendants, le premier comprenant le relais de garde 1, le relais d'alarme 2, le relais de commande 3 et le relais de temporisation 4 et d'un second circuit comprenant le relais de démarrage 5 et les relais 9, 10, 15 et 16. Ainsi, la signalisation d'une effraction et le démarrage du véhicule sont obtenus par deux circuits électriques indépendants, de sorte qu'une panne sur le circuit de programmation et de démarrage rend l'utilisation du véhicule impossible et n'agit pas sur le fonctionnement des moyens de détection et d'alerte, alors qu'une panne sur le circuit d'alarme ne permet pas pour autant l'utilisation du véhicule. On a représenté à la partie inférieure de la Fig.1 la clé de contact 57 reliée d'une part à la batterie 58 et, d'autre part, à la bobine d'allumage 56 elle-même reliée au rupteur 55. Le relais de démarrage 5 commande, par ses contacts 53 et 54, respectivement l'action sur l'électro-aimant, dans le cas d'un moteur Diesel, et le rupteur 55 dans le cas d'un moteur classique qui peut être shunté par le contact 54. Dans le cas d'un moteur à allumage électronique, on utilise le contact 54 avec le même branchement que le contact 53.

Le pupitre ou clavier 87 est un pupitre à touches multiples dont quatre d'entre elles dites "actives" sont connectées respectivement aux relais 9, 10, 15 (par l'intermédiaire du contact 102 du relais 10), et 5 (par les contacts 92 du relais 9 et 152 du relais 15). Le relais 16 est actionné quant à lui par les autres touches n'entrant pas dans la combinaison du code et permet de déclencher l'alarme en cas d'erreur de codage. Les plots du clavier ne sont pas référencés étant entendu que la première touche est celle qui est reliée au relais 9. Le relais 15 est destiné en plus à assurer la garde réduite permettant l'accès à l'intérieur du véhicule mais non le démarrage du moteur. Le code secret est déterminé à partir d'un bornier situé dans le boîtier central comportant les relais et qui est, bien entendu protégé par le verrouillage du capot. L'autorisation d'accès à l'intérieur du véhicule ou garde réduite doit être programmée avant la mise en veille du système d'alarme. La mise en garde réduite est signalée par un voyant ou diode rouge 60. L'annulation de cette autorisation d'accès se fait automatiquement lors de l'enclenchement du relais 5 ou dans le cas d'une programmation erronée du code secret. L'autorisation d'accès à l'intérieur du véhicule (garde réduite) s'obtient par la composition des deux ou trois premiers chiffres du code secret, avant la mise en garde automatique, les deux fonctionnements pouvant être utilisés sans compromettre l'efficacité du dispositif antivol. Dans le cas où la garde réduite s'obtient en composant les deux premiers chiffres, le schéma est tel qu'il faut encore composer sans erreur les deux derniers chiffres du code pour pouvoir utiliser le véhicule et accéder au moteur. Dans le cas où la garde réduite s'obtient en composant les trois premiers chiffres du code (mode de réalisation préféré) le schéma de fonctionnement est tel que la neutralisation de l'alarme et la possibilité de démarrage s'obtiennent en recomposant le premier et le quatrième chiffre du code. Ainsi, on augmente encore le niveau de sécurité du dispositif antivol.

Dans l'exemple représenté, les relais sont des relais miniatures de type statique, embrochables, à deux ou quatre contacts inverseurs. C'est ainsi que le relais 3 présente quatre contacts 31, 32, 33 et 34. Le contact 31 est par exemple relié au klaxon 17 ou plus généralement à un dispositif d'alarme sonore. Le contact 32 peut être relié à la centrale clignotante du véhicule, le contact 33 peut par exemple commander un dispositif de blocage des freins et le contact 34 intervenir au niveau de la pompe à essence pour empêcher son fonctionnement. Bien que pouvant être monté en série avec le relais 3, le clignoteur 18 sera monté de préférence en série avec le klaxon ou d'une manière générale l'alarme sonore. Afin de réaliser des économies, les contacts de portières 61, 62, 65, 66 et le contact de verrouillage du coffre 67 peuvent être ceux qui sont montés en série sur les véhicules modernes en vue de commander l'éclairage du plafonnier et/ou du coffre. Dans ce cas, la mise en garde automatique s'effectue grâce à un relais supplémentaire (non représenté) sur la Fig.1 et commandant les relais 7, 8 et 1. On a représenté en 65a et 66a un autre montage du contacteur 65 à deux contacts (ouvert, fermé) pouvant être généralisés.

Sur la Fig.1, les éléments constituant le dispositif sont représentés en position de repos ou position de garde, le relais 1 étant sous tension. La boucle d'alimentation du relais 1 comporte deux inverseurs 13 et 14. L'inverseur 13 dans la position représentée sur le schéma met en série le contact 67 du coffre alors que dans la position non représentée il shunte le contact 67 ce qui permet un libre accès au coffre même lorsque le dispositif antivol est en position de garde. Le contacteur 14 permet de choisir entre une position "ROUTE" qui est celle représentée sur le schéma et une position "GARAGE". En position "GARAGE", le relais de garde 1 se trouve alimenté en série avec une résistance 142 d'économie limitant la consommation du courant. La tension aux bornes du relais 1 est suffisante pour l'automaintien de celui-ci, mais elle est trop faible pour permettre au relais 1 de s'enclencher de lui-même et c'est pour cette raison que le contact 82 se ferme lors de la première mise en garde avant la coupure de l'alimentation du relais 5 de démarrage à défaut de quoi le relais 8 ne fonctionne pas. Dans la position "ROUTE" (position représentée sur le schéma), le relais 1 se referme normalement après une tentative d'effraction et génère l'émission des signaux d'alerte qui s'arrête à la fin d'un cycle de 30 secondes par exemple.

Selon une caractéristique de l'invention, l'ouverture du capot moteur est bloquée dès que le dispositif est mis en garde par un électro-aimant 88. En effet, il importe d'interdire aux voleurs l'accès au compartiment moteur qui comprend notamment la batterie servant à l'alimentation des différents moyens d'alarme, la centrale antivol comprenant un circuit imprimé support, les relais, le circuit temporisateur, un porte-fusibles, la centrale de clignotement et le boîtier comprenant l'électro-aimant 88 permettant le blocage du câble d'ouverture du capot dont l'extrémité en forme de tirette se trouve habituellement à l'intérieur de l'habitacle. C'est-à-dire que dans le dispositif selon l'invention, tous les éléments du dispositif sont inclus dans le compartiment moteur à l'exception du pupitre de codage et des différents blocs contacteurs disposés sous les sièges ou sur les portières et le hayon ou le coffre arrière et, plus généralement, à l'intérieur du véhicule. Bien entendu, lorsque le dispositif est en position de garde, la coupure de l'un des câbles reliant les contacteurs à la centrale se traduit par l'apparition temporisée de signaux d'alarme. Sur la Fig.1, un certain nombre de composants électroniques tels que résistances ou diodes dont les fonctions sont bien connues de l'homme de l'art assurent leurs fonctions habituelles et ne sont ni décrits ni référencés, bien que leur présence soit, bien entendu, indispensable. Dans l'exemple décrit, les différents composants sont soudés ou embrochés sur un circuit imprimé. Cette structure permet un remplacement aisé du composant défaillant en cas de panne. Il est bien entendu possible de réaliser un circuit intégré noyé, par exemple dans une résine, mais l'ensemble complet doit alors être changé en cas de défaillance quelconque, même minime.

Le fonctionnement du dispositif qui sera décrit en regard de la Fig.1 est le suivant, le schéma étant représenté en position de veille ou de garde, le relais 1 est sous tension, après arrêt du moteur grâce à la clé de contact 57 et le conducteur et tous ses passagers éventuels ont quitté l'habitacle et refermé les portières.

Lorsqu'on ouvre une des portes de la voiture (contacts 61, 62, 65, 66) ou le hayon arrière ou coffre (contact 67), tous les contacteurs étant montés en série, il y a rupture d'alimentation du relais de garde 1. La retombée du contact 11 du relais 1 provoque l'enclenchement du relais d'alarme 2 qui reste auto-alimenté par son contact 21. Une simple impulsion sur le relais 2 suffit. Le relais 2 alimente le circuit de temporisation 4 par son contact 22, ce qui provoque, après un temps t prédéterminé qui peut être de 10 secondes environ par exemple, l'enclenchement du relais de sortie 3. Par son contact 42, le relais 4 provoque l'enclenchement du relais 3 qui actionne les différents moyens d'alerte (klaxon, sirène, feux de détresse, phares) et éventuellement, bloque les freins ou coupe l'arrivée d'essence. C'est donc au cours du temps t que le conducteur habilité doit inhiber le fonctionnement du dispositif antivol. Par son contact 41, le relais 4 coupe l'alimentation du relais 2. Après une deuxième temporisation T de 30 secondes environ, durée de l'alarme sonore, le relais 4 revient en position de repos. La retombée du contact 42 au bout du temps T met fin au fonctionnement des signaux d'alerte. La retombée du contact 41 remet le système en position d'attente, en rétablissant l'alimentation de 2. Si le contact 11 est toujours fermé (portes ouvertes ou siège appuyé), il y a une relance immédiate au niveau des circuits d'alerte et un nouveau cycle recommence, ceci jusqu'à ce que le système soit neutralisé ou que le défaut ait disparu. C'est ainsi que le propriétaire du véhicule dispose de 10 secondes après être entré dans l'habitacle pour composer le code secret afin de couper l'alarme, la mise hors service du circuit d'alarme se traduisant par le basculement du contact 52 du relais de démarrage 5 (position du schéma).

Comme indiqué précédemment, la boucle d'alimentation du relais de garde 1 comporte deux inverseurs. L'un d'eux 13 permet une autorisation d'accès au coffre (contact du coffre shunté) et l'autre 14 permet de sélectionner entre la position "ROUTE" (position normale d'utilisation) et la position "GARAGE". On fait appel au contact 82 qui shunte la résistance 142 et se ferme lors de la première mise en garde (coupure d'alimentation de 5) pour valider le relais 1. Dans la position "ROUTE", le relais 1 peut se refermer normalement après une effraction, les signaux d'alerte s'arrêtant de fonctionner à la fin du cycle de 30 secondes. Lorsque l'on utilise le véhicule, le relais de démarrage 5 est sous tension et le relais 7 est relié à la batterie 58 par le contact 52. Dans la position "GARAGE", le relais 1 ne peut plus se recoller en cas de rupture d'alimentation due à l'ouverture d'un moyen d'accès. Il en résulte que l'alarme ne peut plus se couper automatiquement après la disparition du défaut. La position "GARAGE" n'est à utiliser que lorsque la voiture reste au garage pendant un délai de quinze jours à trois semaines.

Lorsque le propriétaire du véhicule quitte celui-ci il commence par ouvrir sa porte ce qui se traduit par la retombée du contact 61. Tant que les contacts de siège 63 et 64 sont appuyés, rien ne se passe. Au moment où il quitte le siège, le relais 7 s'enclenche et s'autoalimente par le contact 71. Si après être sorti du véhicule il se rasseoit, l'ouverture du contact de siège 63 ou 64 provoque la retombée du relais 7, et le fait de quitter à nouveau le siège, referme le contact 63 ou 64 et provoque alors l'alimentation de 7 par le contact de porte 61.

Au moment où l'on referme la porte (action sur 61), le relais 7 reste alimenté par son contact 71 et les relais 1 et 8 se trouvent alimentés, le contact 72 étant fermé. Si une des portes arrière n'est pas fermée, le relais 1 n'est pas alimenté et il s'ensuit un déclenchement des signaux d'alerte au bout d'un temps de t secondes. On remarque que si une personne reste assise aux places avant dans la voiture, il n'y a pas de mise en garde. De même, lorsque les deux occupants AV quittent le véhicule, la sécurité ne s'enclenche qu'à la fermeture de la deuxième porte (contact 62).

L'enclenchement du relais 8 provoque l'ouverture du contact 81. Ceci entraîne la retombée du relais de démarrage 5 et de son auto-maintien 51. De même, le contact 52 retombe et provoque la rupture d'alimentation du relais 7. Les contacts 71 et 72 s'ouvrent, ce qui entraîne la mise au repos du relais 8. Le relais 5 étant au repos, on alimente le circuit d'alarme par le contact 52. Le relais 1 ayant été enclenché au moment de la fermeture de la porte (action sur 61), on se trouve en position de garde. Le contact 54 fermé, shunte les vis d'allumage du rupteur 55 ce qui interdit le démarrage. Dans le cas d'un moteur Diesel, on interdit la mise en marche en agissant selon le cas sur l'alimentation de l'électrovanne d'arrivée du gazole, ou sur l'alimentation de l'électro-aimant commandant la tirette de la pompe d'injection. Pour cela, on coupe le circuit reliant le bloc de clé de contact de la voiture avec le dispositif en question par l'intermédiaire du contact 53.

Par la retombée du contact 52 on obtient aussi l'extinction du témoin de démarrage (lampe ou LED verte) 59, le blocage d'ouverture du capot (en empêchant l'utilisation de l'électro-aimant de déverrouillage 88 placé sur le câble de la tirette d'ouverture de ce dernier) et l'allumage de la lampe ou LED rouge 60 si la garde réduite a été programmée et le relais 15 enclenché.

L'utilisation du véhicule ne devient possible qu'après l'enclenchement du relais 5. Pour cela, il faut composer dans le bon ordre les quatre chiffres du code secret. Le premier chiffre enclenche le relais 9 qui s'auto-alimente par le contact 91. Le deuxième chiffre agit sur le relais 10 qui ne s'auto-alimente que si le contact 91 est fermé, ceci à travers une diode et le contact d'auto-maintien 101. Cette diode empêche l'enclenchement simultané de 9 et 10 lorsqu'on agit sur le deuxième chiffre du code. Le contact 102 en position travail permet l'alimentation du relais 15 lorsqu'on donne une impulsion sur le troisième chiffre. Le relais 15 s'auto-alimente par 151 et autorise le fonctionnement du relais 5 par la fermeture de 152. Les contacts 152 et 92 étant en position travail, une impulsion sur le quatrième chiffre actif du code entraîne la mise sous tension du relais 5 qui s'auto-alimente par le contact 51 et une alimentation directe du relais de garde 1 par le biais d'une diode 19. On obtient ainsi d'une part la commutation du contact 52 et d'autre part l'ouverture du contact 12, ce qui permet de faire retomber les relais 9 et 10. On utilise ce montage afin d'éviter des aléas de fonctionnement, le temps de commutation du contact 52 ne permettant pas toujours d'avoir une rupture d'alimentation suffisamment longue pour obtenir la retombée des relais 9 et 10.

Les relais 9 et 10 retombant en position repos, le contact 92 fait de même. Si l'action sur le quatrième chiffre du code n'est pas trop fugitive, on envoie par le contact 92 retombé, une impulsion sur le relais 16 qui, par son contact 162, vient couper à son tour le relais 15 correspondant à la garde réduite (autorisation d'accès à l'intérieur du véhicule par neutralisation de différents systèmes de détection). Ainsi, l'enclenchement du relais de démarrage 5 résultant de la composition du code secret, entraîne la mise au repos de tous les relais et l'annulation de l'autorisation d'accès à l'intérieur du véhicule (garde réduite). De ce fait, on voit que celle-ci ne peut résulter que d'une programmation volontaire effectuée avant de descendre du véhicule. Toute erreur de programmation entraîne la mise au repos des relais 9, 10 et 15 et le déclenchement immédiat des signaux d'alerte par l'intermédiaire du relais 16 et de ses contacts 161 et 163. Toutefois, lorsqu'on compose le quatrième chiffre du code et que 5 s'enclenche, le relais 16 reçoit une impulsion mais le signal sonore ne fonctionne pas. En effet, le circuit de temporisation 4 commandé par 163 n'est pas sous tension du fait que 52 est en position travail. De même, la commande directe du relais 3 par 161 ne peut être réalisée du fait que le contact 12 s'ouvre dès qu'on agit sur le quatrième chiffre.

Lorsque le relais de démarrage 5 est alimenté, on peut enclencher les relais 9, 10 et 15 de manière à obtenir la garde réduite. Lorsqu'on descend du véhicule et qu'on referme la porte, l'impulsion reçue par le relais 8 a pour effet de mettre le système en garde. Ceci se traduit par la mise au repos de 5 par l'ouverture du contact 81 et la mise au repos de 9 et 10 par l'ouverture du contact 83. Seul le relais 15 reste alimenté pour la neutralisation des détecteurs (ainsi que le relais 1 bien entendu).

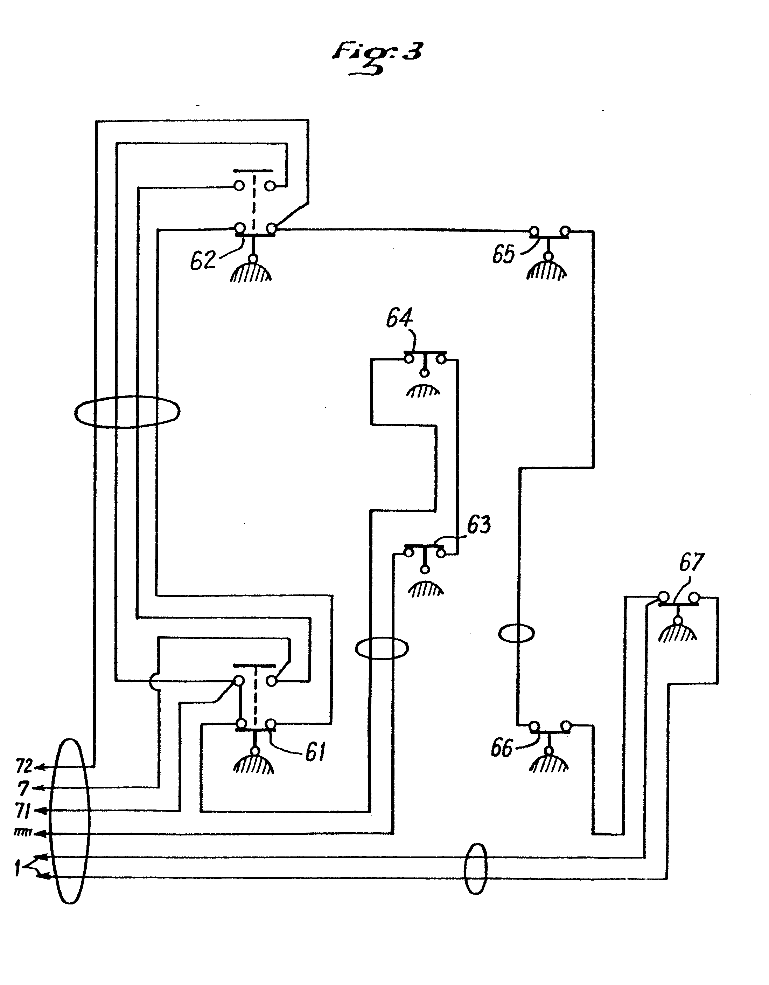

La Fig.3 représente un schéma de branchement multifilaire sur lequel on retrouve les différents contacts de portières avant 61 et 62, de portières arrières 65 et 66, de sièges 63, 64 et de hayon ou de coffre 67. les faisceaux unifilaires et bifilaires sont passés sous la moquette du véhicule alors que le faisceau quadrifilaire passe sous le tableau de bord. Tous les conducteurs sont rassemblés en un faisceau de six fils qui sont reliés à la centrale et, respectivement, à la masse (1 fil), au relais 7 et à ses contacts 71 et 72 et au relais 1. Il est bien entendu possible de prévoir sur le clavier un interrupteur supplémentaire permettant de déclencher l'alarme sonore alors que le conducteur est encore dans l'habitacle, ceci en cas d'une agression extérieure.

La présente invention vise également l'application d'un tel dispositif aux camions ou poids lourds, la remorque (ou la caisse de chargement) restant protégée contre l'ouverture des portes, même lorsque le relais de démarrage 5 est armé ou en position travail et que le moteur tourne, afin de mettre le chargement en sécurité dans tous les cas. L'ouverture des portes ne peut se faire sans déclenchement de l'alarme qu'après que le chauffeur ait donné l'autorisation d'accès par la programmation de la garde réduite. De plus, dans le cas d'un véhicule attelé, le schéma de fonctionnement offre une protection contre le débranchement de la prise de remorque, la coupure du câble de liaison ainsi qu' une protection contre des tentatives de neutralisation du système par essais de court-circuitage effectués sur le câble de liaison.

Lorsqu'il s'applique à un poids lourd, le branchement de la prise de sécurité de la remorque oblige le chauffeur à basculer en position "remorque", un inverseur bipolaire situé sur le pupitre de commande. Le non respect de cette obligation se traduit par le fonctionnement immédiat des signaux sonores, sauf si le conducteur a programmé la garde réduite. En tout état de cause, le chauffeur sera prévenu tôt ou tard de son oubli lorsqu'il voudra mettre son véhicule en protection normale.

Le pupitre de commande dans la version poids lourd, représenté sur la Fig.8, comporte un poussoir avec contact à ouverture branché en série avec l'auto-maintien du relais de démarrage 5. L'action sur celui-ci permet au conducteur de mettre son véhicule en position de garde maximum lorsqu'il désire prendre du repos (protection contre l'ouverture des portes de la cabine, contre le démontage des batteries et éventuellement le soulèvement pour démontage des roues).

Dans la version poids lourd, le dispositif inclût, de préférence, une batterie de secours située dans un endroit inaccessible afin de pallier au débranchement éventuel de la batterie principale qui, elle, reste normalement accessible. Ce principe de montage se traduit par une mise en parallèle des deux batteries lorsque le moteur tourne (relais 5 enclenché) et par une mise hors d'atteinte de la batterie de secours lorsque le relais de démarrage est au repos (véhicule en garde) par l'un des contacts du relais 5. Par sécurité, le montage est complété par un témoin lumineux (diode LED) situé sur le pupitre de commande et qui s'éteindra dès que la tension de la batterie de secours chutera anormalement. Le dispositif antivol poids lourd est également caractérisé par le fait que le relais de garde 1 est alimenté par la batterie principale, tout le reste de l'installation d'alarme étant branché sur la batterie de secours. Cette caractéristique se traduit par le déclenchement des signaux d'alerte en cas de tentative de vol, ou simplement de tentative de déconnexion des batteries du véhicule.

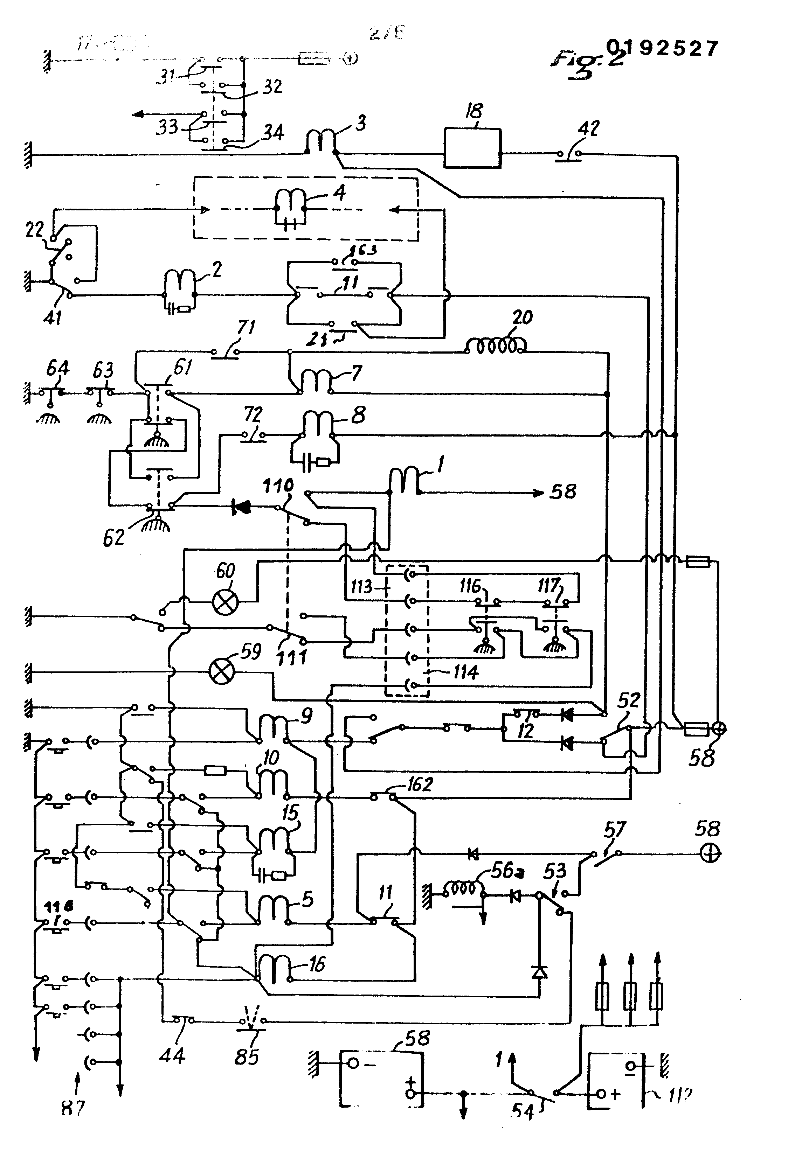

On retrouve sur la figure 2 qui représente une application de l'invention destinée aux poids lourds et notamment aux véhicules semi-remorques ainsi qu'à tout véhicule tracté tel que des caravanes, par exemple, les éléments essentiels qui ont été décrits en regard de la Fig.1, à savoir le relais de garde 1, les relais d'alarme, de temporisation et de sortie 2, 3 et 4, le relais de démarrage 5 ainsi que les relais 9, 10, 15 et 16 reliés à un pupitre de commande 87 et les différents contacts commandés par ces relais. En ce qui concerne les véhicules poids lourds comprenant un tracteur et une remorque, il est nécessaire de distinguer le cas où le tracteur se déplace seul et le cas où le tracteur se déplace avec une remorque, étant donné que la protection de la remorque doit également être assurée par le dispositif antivol. A cet effet est prévu un sélecteur double 110, 111 qui, dans la position représentée sur le schéma, connecte au relais 1 les contacts de portières 116 et 117 de la caisse de chargement qui, dans l'exemple représenté, sont au nombre de deux mais qui, bien entendu, peuvent être plus nombreux en fonction de la

structure de la remorque ou de la caisse du camion. Le commutateur 110 connecte les contacts de portières 116 et 117 au relais de garde 1, alors que le commutateur 111 connecte ces mêmes contacteurs au circuit de programmation et de démarrage. Pratiquement, un socle femelle 113 est disposé sur le tracteur, socle dans lequel vient s'enficher un connecteur de remorque 114 à fiche mâle relié à un câble solidaire de la remorque. Le relais 1 est relié au pôle positif de la batterie principale 58 par le contact 54. Le contact moteur 57 est également directement connecté à la batterie 58. La batterie auxiliaire 112 est branchée d'une part à la masse et, d'autre part sur le contact 54 lui-même connecté au relais de garde 1. Elle alimente l'ensemble du dispositif antivol à l'exception du relais 1.

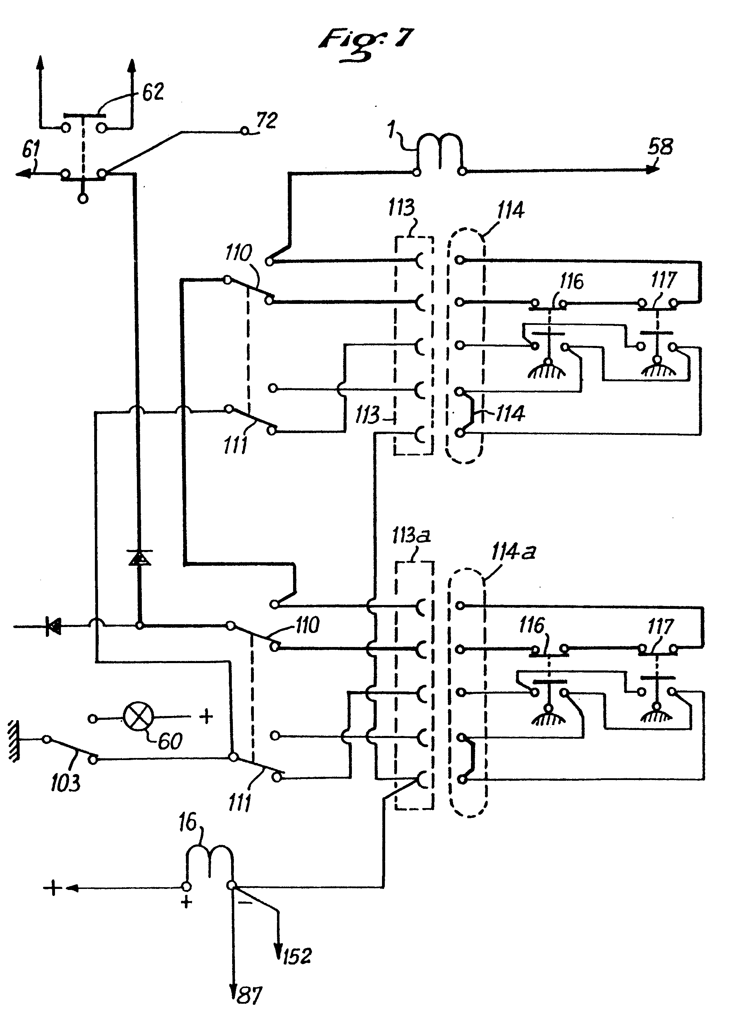

La Fig.7 représente le schéma de montage d'un antivol sur un poids lourd, camion ou semi-remorque sur lequel on retrouve les éléments principaux mentionnés précédemment à savoir : le relais 1, un contact de portières 62 de la cabine, les commutateurs 110 et 111 qui sur cette figure sont au nombre de deux, de manière à ce que le dispositif puisse être monté indifféremment sur un ensemble camion porteur + remorque ou sur un ensemble semi-remorque. On retrouve également sur la Fig.7 le relais 16 dont le pole négatif est relié au contact 152 d'une part et au pupitre 87, d'autre part. Avantageusement, les contacts 116, 117 sont des contacteurs à deux positions O + F, les contacts F formant la boucle d'alimentation du relais 1 et les contacts O alimentant le relais 16.

La liaison entre la cabine et la caisse du camion (ou entre le tracteur et la remorque) est effectuée au moyen de connecteurs mâle et femelle 114 et 113, ou 114a et 113a respectivement, à cinq broches. Les connecteurs 113 et 114 sont utilisés dans le cas d'un camion à caisse fermée, le socle femelle 113 étant monté sur le chassis du camion et à l'arrière de celui-ci. La fiche mâle 114 est reliée par des conducteurs à des contacts de fin de course 116, 117, placés sur les portes du caisson. Le socle femelle 113a est fixé sur le chassis du tracteur et à l'arrière de celui-ci alors que la fiche mâle 114a est solidaire d'un câble à au moins cinq conducteurs relié à la remorque. De préférence, le câble forme une boucle autour des roues de secours, de manière à éviter le vol de celles-ci. Bien entendu, il est possible de prévoir dans le circuit, un relais de garde spécialisé pour la caisse ou la remorque. A ce moment, deux des conducteurs du câble sont connectés à ce relais spécialisé. Comme celà apparaît sur la Fig.8, le pupitre de commande comprend deux commutateurs 110a, 111a, le commutateur de gauche étant destiné à assurer la protection de la caisse du camion et le commutateur de droite celle d'une remorque attelée à ce même camion.

Dans le cas d'un camion, la position solo permet de déconnecter la caisse en cas d'impossibilité de fermer toutes les portes, par exemple lorsqu'une partie du chargement fait saillie à l'extérieur de celle-ci. La fiche 114 est alors déconnectée du socle 113. Le commutateur de droite est mis sur la position solo lorsqu'aucune remorque n'est attelée. Par contre, dès qu'une remorque est attelée, son contenu est protégé.

Un bouton poussoir 118 permet la coupure de l'auto-maintien du relais 5. Comme indiqué précédemment, le but de cette commande est de permettre la protection du véhicule alors que le conducteur reste à l'intérieur afin de se reposer. Mis à part ces particularités, le fonctionnement du dispositif antivol est le même que précédemment.

Selon l'une des caractéristiques de l'invention, le dispositif antivol comprend un détecteur de chocs et d'inclinaison 85. La protection contre les chocs et le soulèvement d'un véhicule est assurée très souvent par des systèmes mécaniques tels que balancier, ampoule de mercure, ou autres systèmes à billes ou à masselotte. Ces dispositifs restent d'un emploi malaisé. En effet, bien qu'ils possèdent généralement un réglage de sensibilité, celle-ci peut varier en fonction de la position du véhicule. Si on augmente trop la sensibilité, le système a tendance à déclencher d'une façon intempestive. A l'inverse, si on réduit trop la sensibilité, une manipulation ou un soulèvement en douceur peut ne pas provoquer le déclenchement de l'alarme.

Il existe également des systèmes de détection électronique qui déclenchent après des chocs ou secousses répétés. Ces détecteurs électroniques sont souvent combinés avec un autre mode de détection, consommation de courant ou variation de tension batterie par exemple. De ce fait, on a affaire à des systèmes complexes et d'un prix assez élevé. De plus, ces appareils étant sensibles, le déclenchement peut être provoqué par la détection de chocs très légers. Un animal faisant des pas sur la voiture (chat ou oiseau) ou par la chute de certains objets (feuilles, branches, glands, etc..) ou par le passage d'un groupe d'enfants effleurant et choquant légèrement le véhicule.

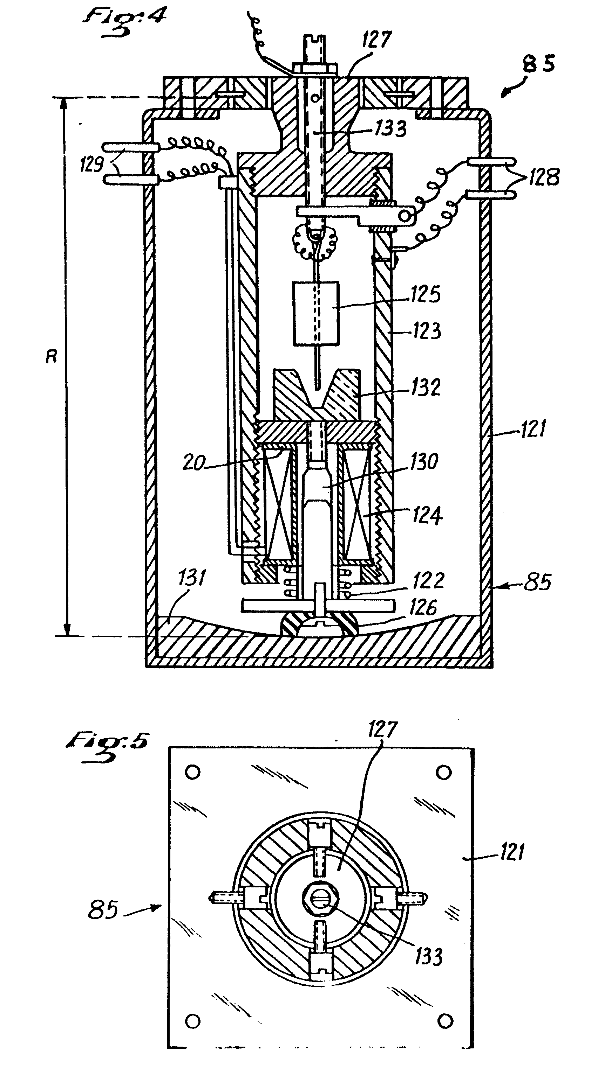

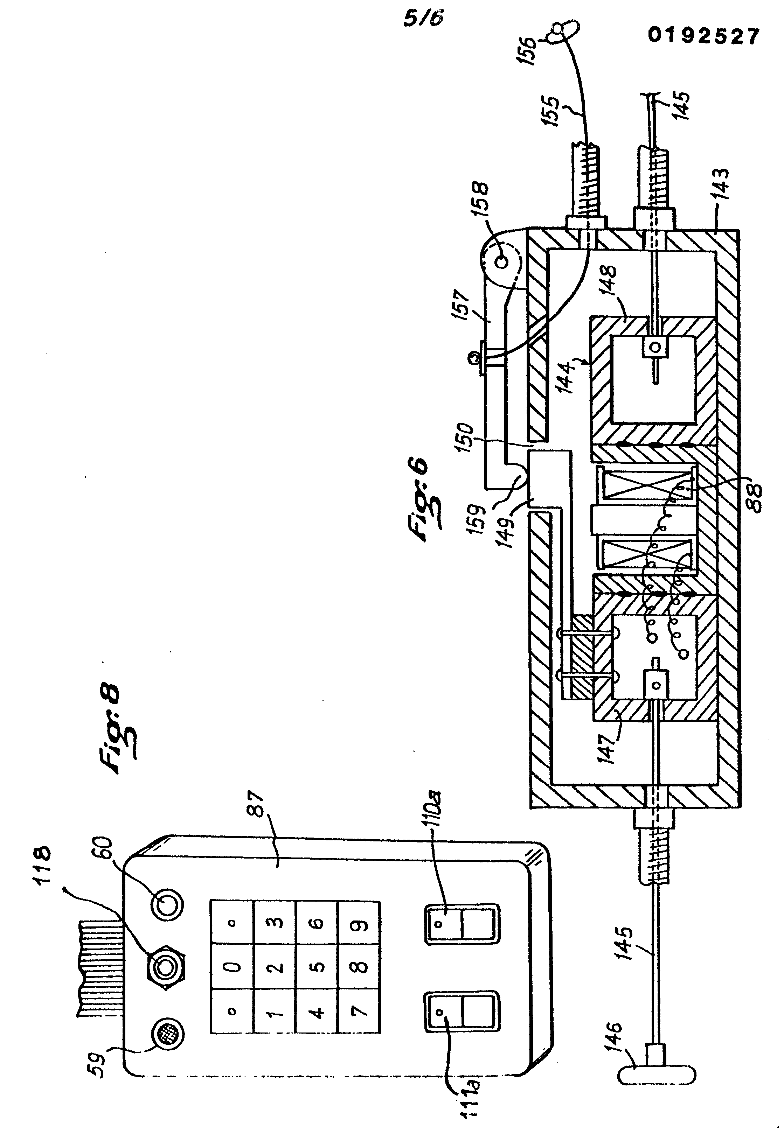

Les Figs 4 et 5 représentent un détecteur de chocs et d'inclinaison, respectivement en coupe verticale et en vue par-dessus. Le détecteur comprend, à l'intérieur d'un boîtier 121, un équipage mobile 123 monté soit sur rotule, soit sur croisillon 127 dans l'exemple représenté, le boîtier 121 étant fixé verticalement sur la carrosserie ou le chassis. L'équipage mobile 123 comporte à sa base un électro-aimant 20 comprenant une bobine 124 qui s'alimente en même temps que le relais 7 lorsqu'on quitte le véhicule. Lorsque l'électro-aimant se trouve excité, le noyau plongeur 130 remonte en comprimant le ressort de rappel 122 et décolle le butoir ou tampon de caoutchouc 126 portant normalement sur le fond du boîtier 131. L'équipage mobile 123 se positionne à la verticale (position du fil à plomb). Lorsqu'on referme la porte, il y a coupure de l'alimentation 129 de l'électro-aimant et le ressort 122 repousse le tampon de caoutchouc 126 sur le fond 131 du boîtier. Ce dernier se présente sous la forme d'une calotte sphérique dont le rayon R est égal à la distance entre celui-ci et le point d'articulation haut de l'équipage mobile 123 et se caractérise par l'emploi d'une matière ou d'une structure permettant d'empêcher tout glissement.

L'ensemble mobile reste bloqué lorsque le véhicule fonctionne. A l'intérieur de cet ensemble mobile se trouve un balancier 125 libre de tout mouvement. Le balancier 125 est solidaire de l'équipage mobile 123 dans sa partie haute et reçoit une tension négative par les conducteurs 128 de raccordement électrique. Pour une bonne liaison électrique, il est raccordé par deux conducteurs extra souples avec le support recevant la tension négative.

.L'autre extrémité du balancier se déplace à l'intérieur d'un perçage conique pratiqué sur une pièce 132 en matière non magnétique (laiton par exemple) et faisant masse avec l'ensemble de l'équipage mobile 123. En cas de chocs ou de changement d'inclinaison du véhicule, l'équipage mobile rendu solidaire du boitier par l'action du tampon de caoutchouc et de ressort perçoit les chocs et s'incline de la même façon que le véhicule. Le balancier 125 vient en contact avec la pièce 132 possédant le perçage conique. A ce moment le relais 16 reçoit une impulsion qui déclenche les signaux d'alerte.

Le balancier central 125 est rendu solidaire d'une tige filetée 133 en laiton par un double système d'anneaux et par un ou deux fils extra fins et très souples assurant une bonne continuité électrique. Cette tige filetée fait saillie à l'extérieur du boitier 121 et possède une gorge permettant de la faire tourner en vue d'un serrage ou d'un desserrage. Ceci permet de faire varier la sensibilité du système. Plus on relève le balancier, plus la distance entre l'extrémité basse de celui-ci et la paroi du trou conique augmente, et plus la sensibilité est diminuée.

Comme indiqué précédemment, une autre caractéristique du dispositif antivol selon la présente invention réside en ce que, lorsque le relais 1 passe à l'état de garde ou veille (relais 5 au repos), ce passage conduit au verrouillage du capot moteur qui est seul en mesure d'éviter une action sur le dispositif lui-même ou sur la batterie. La Fig.6 représente en coupe le dispositif de verrouillage du capot. Il comporte un boîtier 141 auquel est reliée la tirette 142 du capot (non représenté).

La Figure 6 représente le dispositif de blocage de l'ouverture du capot moteur. Ce dispositif comprend un boîtier 143 fixé à la carrosserie et incluant un tiroir 144 mobile et à l'intérieur du boîtier, un câble en deux parties 145 étant relié au tiroir 144 et étant relié d'une part à une tirette de capot 146 qui se trouve habituellement à l'intérieur de l'habitacle, et d'autre part, à un crochet de maintien du capot (non représenté). Le tiroir 144 comprend deux caissons 147, 148 entre lesquels est monté un électro-aimant 88 qui, comme cela apparait sur la Fig.1, est connecté d'une part à un bouton poussoir 89 et d'autre part au contact 52 du relais de démarrage. Le caisson 147 est solidaire d'une patte 149 qui, sur la Fig., passe à travers l'ouverture 150 du boitier 143. La position représentée est la position de blocage, c'est-à-dire qu'il est impossible de tirer le tiroir 144 vers la gauche de la Fig.6 en vue de débloquer le crochet et d'ouvrir le capot. Cette ouverture ne peut être obtenue que par une attraction de l'électro-aimant 88 sur la patte 149, attraction qui abaisse la patte et permet le déplacement du tiroir 144. L'ouverture du capot reste bloquée tant que le relais 5 est au repos (position de garde) et tant qu'on n'a pas excité l'électro-aimant 88 par une action sur le bouton poussoir 89. Toutefois, il peut se produire, notamment par temps froid, que la batterie se décharge et qu'il ne soit plus possible de mettre le moteur en route. Dans ce cas, la solution traditionnelle consiste soit à changer, soit à recharger ou à brancher la batterie, mais pour accéder à celle-ci, il faut pouvoir ouvrir le capot. Conformément à une caractéristique de l'invention, il est prévu un câble de secours 155 dont l'extrémité 156 est soigneusement dissimulée soit sous la moquette de la voiture, soit à l'intérieur d'une aile, le câble 155 agissant sur un levier 157 articulé en 158 sur le boîtier 143, et dont l'extrémité 159 surplombe l'orifice 150. En tirant sur le câble 155, le levier 157 pivote autour de l'axe 158, de sorte que sa tête 159 vienne appuyer sur la patte 149 et débloque celle-ci. Le capot peut ainsi exceptionnellement être ouvert et la batterie rechargée.

# REVENDICATIONS

1° Dispositif antivol pour véhicule automobile du type comprenant un circuit électronique incluant un relais de garde (1) relié d'une part à des moyens de détection comprenant des contacteurs d'ouverture et des contacteurs de présence humaine à l'intérieur du véhicule, et d'autre part, à des moyens d'alarme et/ou d'action sur un organe moteur du véhicule, caractérisé en ce qu'il comprend un clavier électronique de commande (87), des moyens de temporisation (4) connectés entre le relais de garde (1) et le relais de déclenchement de l'alarme (3), un relais de démarrage (5) interdisant la mise en marche du moteur, un ou des moyens interrupteurs manoeuvrables depuis l'intérieur de l'habitacle (63, 64) avant fermeture des contacts d'accès (61, 62, 65, 66, 67), la commande des relais de garde (1), de moteur (5) et l'inhibition des moyens de détection étant sous la dépendance du codage du clavier (87) dont les touches actives sont chacune connectées à un commutateur (9, 10, 15, 5).

2° Dispositif selon la revendication 1, caractérisé en ce qu'il comprend un ou des moyens interrupteurs (63, 64) branchés en série avec les contacts d'accès (61, 62, 65, 66, 67) dans le circuit d'alimentation du relais de garde (1), la mise en garde se traduisant par une coupure de l'alimentation du moteur par le relais (5), par le verrouillage du capot moteur par la coupure du circuit d'alimentation d'un électro-aimant (88) et par l'alimentation des circuits de détection et d'alarme s'effectuant par la connexion des relais (2 et 3), à une ligne de tension positive.

3° Dispositif antivol selon l'une des revendications 1 ou 2, caractérisé en ce que la mise en garde automatique s'effectue par les blocs-contacts (63, 64) commandés de l'intérieur de l'habitacle, et (61, 62, 65, 66) sur les portières du véhicule, le relais de garde (1), un relais de mémorisation (7) et un relais (8) de mise au repos de relais de démarrage (5).

4° Dispositif antivol selon l'une des revendications 1 à 3, caractérisé en ce que le pupitre électronique (87) de commande est connecté à un ensemble de relais (5, 9, 10, 15, 16), la composition sur le pupitre d'un code à au moins deux chiffres avant la mise en garde du dispositif provoquant, par action sur le relais (15), l'inhibition des contacts (61 à 67) et l'allumage d'un voyant (60), l'annulation de la garde réduite résultant soit de l'enclenchement du relais de démarrage (5), soit de la programmation d'un code erroné.

5° Dispositif selon l'une quelconque des revendications précédentes, caractérisé en ce que le dispositif antivol inclût un détecteur de choc et d'inclinaison (85) connecté à l'un des relais (2 ou 16).

6° Détecteur d'inclinaison selon la revendication 5, caractérisé en ce qu'il comprend à l'intérieur d'un boîtier (121) un équipage mobile (123) incluant un électro-aimant (20) dont la bobine (124) est alimentée par le relais (7), l'équipage mobile (123) étant bloqué par un tampon de caoutchouc (126) contre le fond (131) du boîtier (121), lorsque l'électro-aimant (20) est au repos, un réglage de la sensibilité étant obtenu par le réglage de la position relative du balancier (125) par rapport à l'équipage mobile (123).

7° Détecteur de choc selon l'une des revendications 5 et 6, caractérisé en ce qu'un balancier (125) monté pivotant sur l'équipage mobile (123) reçoit une tension négative et peut entrer en contact par sa partie inférieure avec une pièce (132) présentant un perçage conique.

8° Dispositif antivol selon l'une quelconque des revendications précédentes, caractérisé en ce que les moyens de verrouillage de l'ouverture du capot moteur consistent en un boîtier (143) fixé sur la carrosserie et incluant un tiroir (144) mobile à l'intérieur du boîtier relié aux deux parties du câble (145) d'ouverture du capot, le tiroir comprenant une patte (149) passant à travers une ouverture (150) du boîtier (143), la patte (149) pouvant être attirée par l'électro-aimant (88) lorsque celui-ci est alimenté afin de déverrouiller le tiroir (144), les moyens de verrouillage du capot combinés avec le blocage du moteur assurant la protection contre le démarrage du véhicule et le vol de celui-ci même lorsque le circuit d'alarme est défaillant et même lorsque la batterie est déchargée.

9° Dispositif antivol selon la revendication 8, caractérisé en ce qu'un câble de secours (145) permet de débloquer manuellement le tiroir (144).

10° Dispositif antivol selon l'une quelconque des revendications précédentes, caractérisé en ce qu'il présente deux circuits à fonctionnements indépendants, un circuit de programmation et de démarrage (relais 5, 9, 10, 15) et un circuit d'alarme (relais 1, 2, 3, 4), le relais de garde (1) étant connecté à la batterie principale (58) du véhicule et l'ensemble des autres circuits (relais 2, 3, 4, 5, 9, 10, 15) étant alimenté par une batterie de secours (112), la déconnexion de la batterie (58) provoquant le déclenchement de l'alarme.

11° Dispositif antivol selon l'une quelconque des revendications précédentes, caractérisé en ce qu'un inverseur (13) situé sur le pupitre de commande (87) permet de shunter le contact (67) du coffre à bagages.

12° Dispositif antivol selon l'une quelconque des revendications précédentes, caractérisé en ce qu'un inverseur bipolaire (14) situé sur le pupitre de commande (87) connecte directement dans une position le relais (1) aux contacts (61 à 67) de détection, et dans l'autre position, le relais (1) aux mêmes contacts (61 à 67) par l'intermédiaire d'une résistance d'économie (142).

13° Dispositif antivol selon l'une quelconque des revendications précédentes, caractérisé en ce que le pupitre de commande (87) comporte un poussoir (118) avec contact à ouverture branché en série avec l'auto-maintien du relais (5) permettant un déclenchement depuis l'intérieur du véhicule.

14° Dispositif antivol selon l'une quelconque des revendications précédentes destiné à être monté sur un véhicule poids lourd, caractérisé en ce que le pupitre de commande (87) comprend des moyens (110a, 111a) d'isolation vis-à-vis du dispositif antivol de la caisse de chargement du véhicule ou de la remorque attelée à celui-ci.

15° Dispositif antivol selon la revendication 14, caractérisé en ce que la liaison entre le véhicule et sa remorque s'effectue au moyen de connecteurs (113, 114) et de fiches comprenant cinq broches et par un câble électrique comprenant au moins cinq conducteurs.

0192527

16° Dispositif antivol selon la revendication 15, caractérisé en ce que deux des cinq conducteurs du câble forment une boucle d'alimentation du relais de garde (1), assurant un déclenchement des alarmes en cas de rupture ou de débranchement, les trois autres conducteurs permettant un déclenchement des alarmes en cas de court-circuitage du câble par action sur le relais (16).

17° Dispositif antivol selon la revendication 16, caractérisé en ce que le câble à cinq conducteurs reliant les blocs-contacts (116, 117) placés aux portes de la remorque, permet d'empêcher le vol des roues de secours, le câble passant en boucle à l'intérieur des roues.

18° Dispositif antivol appliqué à un ensemble routier, caractérisé par l'utilisation de contacts (116, 117) sur chaque porte du caisson ou de la remorque, les contacts (110) formant une boucle d'alimentation du relais de garde (1) et les contacts (111) appliquant une tension sur un relais (3, 16) permettant de déclencher les alarmes sans passer par la temporisation (4).

Fig. 1

0192527

Fig. 2 0192527

0192527

*Fig. 3*

0192527

Fig.4

127

85

133

129

128

125

123

132

121

20

130

124

122

85

131

126

Fig.5

127

85

121

133

Fig.8

Fig.6

5/6

0192527

## Fig. 7

Office européen
des brevets

RAPPORT DE RECHERCHE EUROPEENNE

0192527
Numéro de la demande

EP   86 40 0173

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int Cl 4) |
|---|---|---|---|
| D,A | GB-A-2 090 033   (THORNE)<br>* En entier * | 1-3,10 | B 60 R   25/00 |
| D,A | GB-A-2 045 985   (HEENEY)<br><br>* En entier * | 1,2,4,<br>10 | |
| A | GB-A-2 081 483   (AGAHI)<br>* Page 2, ligne 71 - page 3, ligne 31; figure 2 * | 1-3 | |
| A | US-A-4 232 289   (DANIEL)<br><br>* Colonne 1, ligne 50 - colonne 2, ligne 39; colonne 3, lignes 11-29; colonne 4, lignes 36-44; figures 1,2 * | 1,2,4,<br>8-10 | |
| | | | DOMAINES TECHNIQUES RECHERCHES (Int Cl.4) |
| A | GB-A-2 041 599   (FAWCETT et al.)<br>* Page 1, ligne 130 - page 2, ligne 64; page 3, lignes 49-53; figures 2,8 * | 2 | B 60 R |
| A | DE-A-2 942 551   (BOSCH)<br>* En entier * | 1,5-7 | |

Le présent rapport de recherche a été établi pour toutes les revendications

| Lieu de la recherche<br>LA HAYE | Date d'achevement de la recherche<br>14-05-1986 | Examinateur<br>VERLEYE J. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82